# EUROPEAN PATENT APPLICATION

(11) **EP 3 181 929 A1**
(43) Date of publication of application: **21.06.2017**
(21) Application number: 15832415.2
(22) Date of filing: 06.03.2015
(51) Int. Cl.: F16C 33/12, F16C 17/02

(54) **SLIDING BEARING**

(30) Priority: 11.08.2014 KR 20140103743
(71) Applicant: Jung, Heechul, Incheon 405-764 (KR)
(72) Inventor: Jung, Heechul, Incheon 405-764 (KR)
(74) Representative: Weickmann & Weickmann PartmbB
(86) International application number: PCT/KR2015/002201
(87) International publication number: WO 2016/024683

(57) **Abstract**

The present invention relates to a sliding bearing comprising: a cylindrical bearing body, which has a penetration space formed therein such that a shaft penetrates the same; an insertion groove formed on the inner surface of the bearing body; and a contact member inserted into the insertion groove so as to contact the shaft, wherein the bearing body comprises a cylindrical first body and a cylindrical second body, which is coupled to the first body, and the first and second bodies are coupled to each other, thereby forming the cylindrical bearing body.

## Description

### [Technical Field]

The present invention relates to sliding bearing for smoothly moving a shaft.

### [Background Art]

Generally, a shaft (propeller shaft) of a powertrain system is supported to be able to perform rotation and a linearly motion using a bearing as a medium. Such a bearing is classified as a sliding bearing or a rolling bearing based on how a contact is made with the shaft.

The sliding bearing is formed to wrap an entirety or part of a surface of a contact portion (journal) between a shaft and the bearing. Normally, lubricating oil is coated on the contact portion between the sliding bearing and the shaft.

Since the sliding bearing is in face contact with the shaft, the sliding bearing may support a bigger load than the rolling bearing. Accordingly, the sliding bearing is used for an apparatus or large equipment requiring large power transmission.

Particularly, when the sliding bearing is used for a marine structure, the sliding bearing may be disposed under water. Accordingly, a study of a sliding bearing which can be operated under special condition such as that under water, has no worry about contamination, and can be easily installed has been actively conducted.

### [Disclosure]

### [Technical Problem]

The present invention is directed to providing a sliding bearing provided with a structure capable of being easily realized and installed in a various shape.

The present invention is also directed to providing a sliding bearing provided with a structure capable of being safely installed and used under a special condition.

### [Technical Solution]

One aspect of the present invention provides a sliding bearing which may include a bearing body in a cylindrical shape in which a penetration space through a shaft passes is formed, an insertion groove formed in an inner surface of the bearing body, and a contact member inserted into the insertion groove to be in contact with the shaft, wherein the bearing body includes a first body in a cylindrical shape and a second body in a cylindrical shape, and the first body and the second body are coupled and form the bearing body in the cylindrical shape.

The first body includes a first coupling surface in contact with the second body and a first coupling groove formed in the first coupling surface, the second body includes a second coupling surface in contact with the first body, a second coupling groove formed in the second coupling surface, and a coupling unit inserted into the first coupling groove and the second coupling groove to couple the first body and the second body.

The first body may include the first coupling surface in contact with the second body, the insertion groove may include a first insertion groove formed in an inner surface of the first body to pass through the first coupling surface, the bearing body may include a first limit portion formed to block the first insertion groove from the first body to a surface opposite the first coupling surface, and the first limit portion may be integrally formed with the first body.

The second body may include the second coupling surface in contact with the first body, the limit portion may include a second limit portion formed in an inner surface of the second body to pass through the second coupling surface, the bearing body may include a second limit portion formed to block the second limit portion from the second body to a surface opposite the second coupling surface, and the second limit portion may be integrally formed with the second body.

The insertion hole may include a seating portion in which the contact member is seated and a fixing portion configured to fix the contact member to the seating portion.

The contact member may be formed of polytetrafluoroethylene.

Another aspect of the present invention provides a sliding bearing including a bearing body in a cylindrical shape in which a penetration space through a shaft passes is formed, an insertion groove formed in an inner surface of the bearing body, a first limit portion formed at one end of the bearing body to cover the insertion groove, and a second limit portion formed at the other end of the bearing body to cover the insertion groove, and the first limit portion and the second limit portion are integrally formed with the bearing body.

The bearing body includes a first body in a cylindrical shape and a second body in a cylindrical shape coupled to the first body, and the first body and the second body are coupled and form the bearing body in the cylindrical shape.

Still another aspect of the present invention provides a sliding bearing including a first body in a cylindrical shape including a first penetration space formed in the first body such that a shaft passes through the first penetration space, and a first coupling surface formed at one end thereof, and a second body in a cylindrical shape including a second penetration space formed in the second body such that a shaft passes through the second penetration space, and a second coupling surface formed at one end thereof, wherein the first body and the second body are coupled such that the first coupling surface and the second coupling surface are in contact with each other and the first penetration space and the second penetration space are connected with each other.

### [Advantageous Effects]

Since a sliding bearing according to one embodiment of the present invention is provided with a bearing body formed by coupling a first body and a second body, sliding bearings in various shapes can be easily realized by assembling the first body and the second body.

The sliding bearing according to one embodiment of the present invention can minimize or prevent contamination by coupling the first body and the second body using a coupling unit.

### [Description of Drawings]

FIG. 1 is a perspective view illustrating a sliding bearing according to one embodiment of the present invention.
FIG. 2 is an exploded perspective view illustrating the sliding bearing according to one embodiment of the present invention.
FIG. 3 is a perspective view illustrating a first body in FIG. 2 seen from another direction.
FIG. 4 is a perspective view illustrating a second body in FIG. 2 seen from another direction.
FIG. 5 is a perspective view illustrating a first body in FIG. 3 according to another embodiment.
FIGS. 6A and 6B are cross-sectional views illustrating an insertion groove and a contact member in FIG. 2.

**[Description of numerals]**

| | |
|---|---|
| 10 : sliding bearing | |
| 100 : bearing body | 101 : penetration space |
| 102 : first penetration space | 103 : second penetration space |
| 110 : first body | 111 : first coupling surface |
| 112 : first coupling groove | |
| 120 : second body | 121 : second coupling surface |
| 122 : second coupling groove | |
| 141 : first limit portion | 142 : second limit portion |
| 200 : insertion groove | |
| 201 : first insertion groove | 202 : second insertion groove |
| 210 : seating portion | 220 : fixing portion |
| 300: contact member | 400 : coupling unit |

### [Modes of the Invention]

Hereinafter, exemplary embodiments of the present invention will be described in detail with reference to the accompanying drawings. These embodiments described below will be only described in detail so that the invention can be performed by those skilled in the art and may not limit the scope of the present invention. That is, various embodiments of the invention are different but not necessarily mutually exclusive. For example, a specific shape, structure, and characteristic of an embodiment described herein may be realized in another embodiment without departing from the scope and spirit of the invention. In addition, a position or an arrangement of each component in each disclosed embodiment may be changed without departing from the scope and spirit of the invention. In describing the various embodiments of the present invention, even when illustrated in different drawings, the same numerals are assigned to the same components having the same technological properties whenever possible. Furthermore, since sizes and thicknesses of components in the drawings are arbitrarily illustrated for convenience of explanation, the present invention is not necessarily limited thereto, and the thicknesses of components in the drawings have been enlarged or downsized for clearly illustrating various portions and regions.

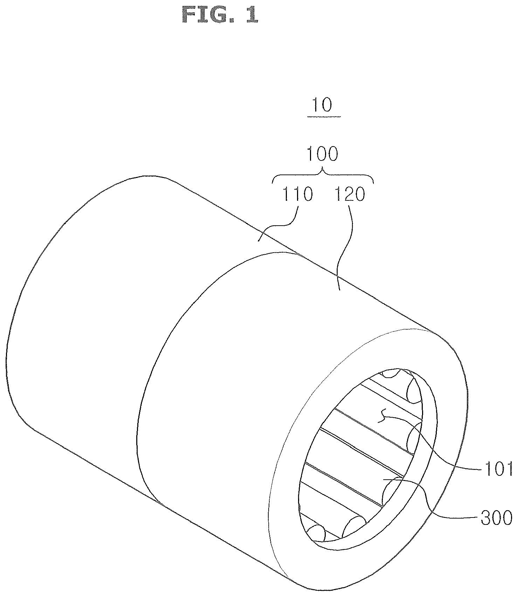

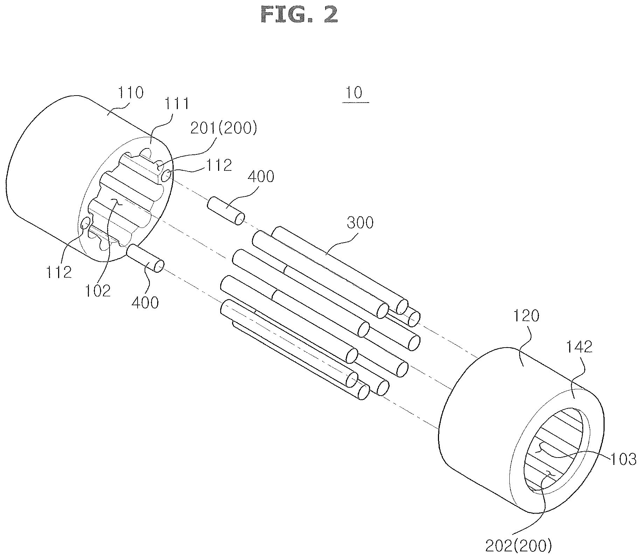

Referring to FIGS. 1 and 2, a sliding bearing 10 according to one embodiment of the present invention includes a bearing body 100 in a cylindrical shape. The sliding bearing 10 according to one embodiment of the present invention may include an insertion groove 200 formed in an inner surface of the bearing body 100 and a contact member 300 inserted into the insertion groove 200.

Referring to FIGS. 1 and 2, a shaft (not shown) may pass through the inside of the bearing body 100. A penetration space 103 may be formed in the bearing body 100. The shaft may pass through the bearing body 100 using the penetration space 103 formed in the bearing body 100.

The bearing body 100 may be formed in a cylindrical shape. The bearing body 100 may be formed in the cylindrical shape in which the penetration space 103 is formed.

Referring to FIGS. 1 and 2, the bearing body 100 includes a first body 110 and a second body 120 coupled to each other. The first body 110 in a cylindrical shape and the second body 120 in a cylindrical shape are coupled to form the bearing body 100 in a cylindrical shape. The first body 110 and the second body 120 may be formed to have the same diameter or approximately similar diameters.

Referring to FIGS. 1 to 3, the first body 110 may be formed in a cylindrical shape. A first penetration space 102 may be formed in the first body 110. The first body 110 may be formed in a cylindrical shape in which the first penetration space 102 is formed. The shaft may pass through the inside of the first body 110. The shaft may pass through the first body 110 using the first penetration space 102 formed in the first body 110.

A first coupling surface 111 may be formed at one end of the first body 110. The first coupling surface 111 is in contact with the second body 120 at the first body 110 when the first body 110 and the second body 120 are coupled. The first body 110 is coupled to the second body 120 such that the first coupling surface 111 is in contact with the second body 120.

The first body 110 may include a first coupling groove 112 formed in the first coupling surface 111. The first coupling groove 112 may be formed in the first coupling surface 111. A plurality of first coupling grooves 112 may be formed in the first coupling surface 111. According to the drawings, two first coupling grooves 112 are formed in the first coupling surface 111. However, the number of coupling grooves is not limited thereto, and only one first coupling groove 112 or three or more first coupling grooves 112 may also be formed in the first coupling surface 111. Here, the number of first coupling grooves 112 may be the same as that of the second coupling grooves 122. In addition, positions of the first coupling grooves 112 may be formed at positions corresponding to positions of the second coupling grooves 122.

The first coupling groove 112 may be formed such that a coupling unit 400 which will be described below may be inserted thereinto. The first coupling groove 112 may be formed in a shape into which the coupling unit 400 is inserted.

Referring to FIGS. 1, 2, and 4, the second body 120 may be formed in a cylindrical shape. A second penetration space 103 may be formed in the second body 120. The second body 120 may be formed in a cylindrical shape in which the second penetration space 103 is formed. A shaft may pass through the inside of the second body 120. The shaft may pass through the second body 120 using the second penetration space 103 formed in the second body 120.

A second coupling surface 121 may be formed at one end of the second body 120. The second coupling surface 121 is in contact with the first body 110 at the second body 120 when the second body 120 and the first body 110 are coupled. The second body 120 is coupled to the first body 110 such that the second coupling surface 121 is in contact with the first body 110.

The second body 120 may include a second coupling groove 122 formed in the second coupling surface 121. The second coupling groove 122 may be formed in the second coupling surface 121. A plurality of second coupling grooves 122 may be formed in the second coupling surface 121. According to the drawings, two second coupling grooves 122 are formed in the second coupling surface 121. However, the number of grooves is not limited thereto, and only one second coupling groove 122 or three or more second coupling grooves 122 may also be formed in the second coupling surface 121. Here, the number of the second coupling grooves 122 may be the same as that of the first coupling grooves 112. In addition, positions of the second coupling grooves 122 may be formed corresponding to positions of the first coupling grooves 112.

The second coupling groove 122 may be formed such that the coupling unit 400 which will be described below may be inserted thereinto. The second coupling groove 122 may be formed in a shape into which the coupling unit 400 is inserted.

The first body 110 and the second body 120 are coupled such that the first coupling surface 111 and the second coupling surface 121 are in contact with each other. The first body 110 and the second body 120 are coupled such that the first penetration space 102 and the second penetration space 103 are connected. When the first body 110 and the second body 120 are coupled, the first coupling surface 111 and the second coupling surface 121 are in contact with each other. In addition, when the first body 110 and the second body 120 are coupled, the first penetration space 102 and the second penetration space 103 become connected. When the first body 110 and the second body 120 are coupled, the first penetration space 102 and the second penetration space 103 become connected to form the penetration space 103.

Referring to FIGS. 1 and 2, the sliding bearing 10 according to one embodiment of the present invention may include the coupling unit 400 which couples the first body 110 and the second body 120. The coupling unit 400 may be simultaneously inserted into the first coupling groove 112 and the second coupling groove 122 to couple the first body 110 and the second body 120.

The coupling unit 400 may be inserted into the first coupling groove 112 and the second coupling groove 122 and be fixed. The coupling unit 400 may be simultaneously fixed to the first coupling groove 112 and the second coupling groove 122 to couple the first body 110 and the second body 120.

The coupling unit 400 may have a diameter the same as or approximately similar to that of each of the first coupling groove 112 and the second coupling groove 122 to be inserted into and fixed in the first coupling groove 112 and the second coupling groove 122. The diameter of the coupling unit 400 may be greater than that of each of the first coupling groove 112 and the second coupling groove 122. However, the diameter of the coupling unit 400 may be as large as is necessary for the coupling unit 400 to be forcibly inserted and fixed in the first coupling groove 112 and the second coupling groove 122.

The coupling unit 400 may be formed in a shape corresponding to shapes of the first coupling groove 112 and the second coupling groove 122. According to the drawings, although the coupling unit 400 is illustrated in a cylindrical shape, the shape is not limited thereto. The coupling unit 400 may be formed in various shapes such as a rectangular column, a pentagonal column, etc. In addition, the coupling unit 400 may have a portion inserted into the first coupling groove 112 and another portion inserted into the second coupling groove 122, which may have different shapes.

Since the sliding bearing 10 according to one embodiment of the present invention couples the first body 110 and the second body 120 using the coupling unit 400, an adhesive may not be used for the sliding bearing 10 according to one embodiment of the present invention. Particularly, when the coupling unit 400 is forcibly inserted into the first coupling groove 112 and the second coupling groove 122 to couple the first coupling groove 112 and the second coupling groove 122, the adhesive may not be used at all.

Since the sliding bearing 10 according to one embodiment of the present invention is provided with a structure which does not use an adhesive, the sliding bearing 10 may be operated under a special condition such as under water. Even when the sliding bearing 10 according to one embodiment of the present invention is installed under water, the sliding bearing 10 according to one embodiment of the present invention can be prevented from being disassembled due to a loss of coupling property caused by water. In addition, since the sliding bearing 10 according to one embodiment of the present invention is provided with a structure in which an adhesive is not used, water contamination due to the adhesive can be prevented.

Since the sliding bearing 10 according to one embodiment of the present invention is provided with a structure in which no adhesive is used, a secondary chemical reaction due to the adhesive can be prevented. The sliding bearing 10 according to one embodiment of the present invention can eliminate the problem of a product being contaminated by an adhesive. Particularly, even when the sliding bearing 10 according to one embodiment of the present invention is used in a food manufacturing apparatus for which a product contamination would be a critical shortcoming, the contamination can be prevented from occurring.

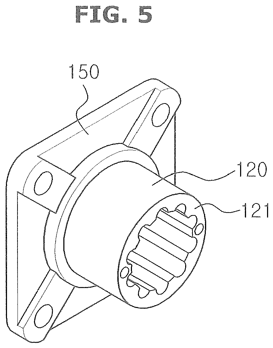

Referring to FIG. 5, the bearing body 100 may further include a flange portion 150. The flange portion 150 may be coupled to a side surface of the second body 120. The flange portion 150 may be coupled to the second body 120 to protrude from the side surface of the second body 120.

The flange portion 150 may be positioned on the side surface of the second body 120 and adjacent to an end opposite an end on which the second coupling surface 121 is formed.

The flange portion 150 may firmly couple the bearing body 100 including the second body 120 to another structure.

As shown in the drawings, the flange portion 150 may be formed in an overall circular shape. However, the shape is not limited thereto, and the flange portion 150 may also be formed in a rectangular shape. Alternatively, the flange portion 150 may also be formed to protrude from the side surface of the second body 120. A plurality of flange portions 150 may be coupled to the side surface of the second body 120.

Although not illustrated in the drawings, the flange portion 150 may also be coupled to a side surface of the first body 110. The flange portion 150 may also be coupled to the first body 110 to protrude from the side surface of the first body 110.

By being provided with a bearing body 100 formed by coupling the first body 110 and the second body 120, the sliding bearing 10 according to one embodiment of the present invention may be realized in variously shapes. That is, by assembling a first body 110 and a second body 120 in various shapes, sliding bearings in various shapes may be realized.

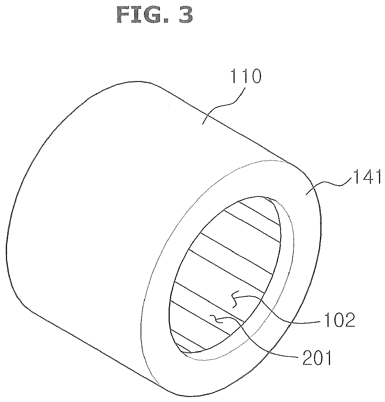

For example, to realize a sliding bearing in a bush shape, the cylindrical first body 110 and the cylindrical second body 120 having the same shape are assembled as illustrated in FIGS. 1 and 2. On the other hand, to realize a sliding bearing having a flange shape, the second body 120 coupled to the flange portion 150 and the cylindrical first body 110 similar to that illustrated in FIG. 3 are assembled as illustrated in FIG. 5. In addition, although not illustrated in the drawings, the first body 110 and the second body 120 may both be of a form of being coupled to the flange portion 150. That is, the first body 110 and the second body 120 coupled to the flange portion 150 may also be coupled.

As describes above, rather than manufacturing the sliding bearings whenever sliding bearings in various shapes are needed, the first body 110 and the second body 120 in various shapes are provided in advance so that when sliding bearings of a desired shape are needed, the first body 110 and the second body 120 of appropriate shapes are assembled so that the sliding bearings having the desired shapes are realized. Therefore, according to the sliding bearing 10 according to one embodiment of the present invention, sliding bearings in various shapes may easily and simply be realized.

Particularly, when a sliding bearing in an unanticipated new shape is needed for a special condition such as that under water, the sliding bearing 10 according to one embodiment of the present invention may realize sliding bearings in various shapes using the first body 110 and the second body 120 which have already been prepared.

Referring to FIG. 2, the insertion groove 200 may be formed in the inner surface of the bearing body 100. The insertion groove 200 may be formed along the lengthwise direction of the cylindrical bearing body 100. The insertion groove 200 may extend along the lengthwise direction of the bearing body 100.

A plurality of insertion grooves 200 may be formed in the inner surface of the bearing body 100. The insertion grooves 200 may be formed in the inner surface of the bearing body 100 along a circumferential direction thereof. The insertion grooves 200 may be spaced apart from each other by a predetermined distance and formed in the inner surface of the bearing body 100.

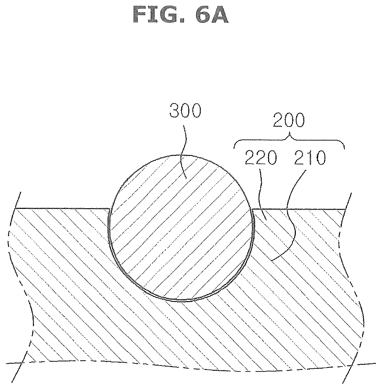

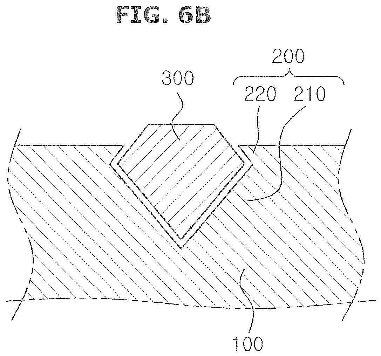

Referring to FIGS. 6A and 6B, the insertion groove 200 may include a seating portion 210 on which the contact member 300 is seated and a fixing portion 220 for fixing the contact member 300.

The contact member 300 may be seated on the seating portion 210. A cross-section of the seating portion 210 may be formed in a shape such that the contact member 300 may be seated. Accordingly, the cross-section of the seating portion 210 may be formed in the shape corresponding to a cross-section of the contact member 300. As illustrated in FIG. 6A, the cross-section of the seating portion 210 may be formed in a semicircular shape. Alternatively, as illustrated in FIG. 6B, a cross-section of the seating portion 210 may be formed in a triangular shape. However, the cross-section of the seating portion 210 is not limited thereto, and the cross-section of the seating portion 210 may be formed in various shapes such that the contact member 300 may be seated.

The fixing portion 220 may prevent the separation of the contact member 300 from the seating portion 210. A cross-section of the fixing portion 220 may be formed in a shape capable of preventing the separation of the contact member 300 from the seating portion 210. The fixing portions 220 may be formed at both end portions of the seating portion 210. Two fixing portions 220 formed at the both end portions of the seating portion 210 may be formed to be getting closer to each other as getting away from the end portions of the seating portion 210. The two fixing portion 220 may be formed to be getting close to each other as getting away from the end portions of the seating portion 210 to fix the contact member 300 to the seating portion 210.

The fixing portion 220 may be formed in a shape for fixing the contact member 300 to the seating portion 210. A cross-section of the fixing portion 220 may be formed in a shape for fixing the contact member 300 to the seating portion 210. The cross-section of the fixing portion 220 may be formed in a shape corresponding to a cross-sectional shape of the contact member 300. As illustrated in FIG. 6A, the cross-section of the fixing portion 220 may be formed in a curved arc shape, or as illustrated in FIG. 6B, a cross-section of the fixing portion 220 may also be formed in a straight linear shape. However, the shape of the cross-section of the fixing portion is not limited thereto, and the cross-section of the fixing portion 220 may be formed in various shapes capable of fixing the contact member 300 to the seating portion 210.

That is, the sliding bearing 10 according to one embodiment of the present invention may fix the contact member 300 to the insertion groove 200 without using an adhesive.

Since the sliding bearing 10 according to one embodiment of the present invention is provided with a structure capable of fixing the contact member 300 to the insertion groove 200 without using an adhesive, the sliding bearing 10 can be installed under a special condition such as that under water. Even when the sliding bearing 10 according to one embodiment of the present invention is installed under water, the separation of the contact member 300 from the insertion groove 200 caused by the loss of coupling property due to the water is prevented.

In addition, since the sliding bearing 10 according to one embodiment of the present invention is provided with a structure in which no adhesive is used, a secondary chemical reaction due to the adhesive can be prevented. The sliding bearing 10 according to one embodiment of the present invention can eliminate a problem of a product being contaminated by an adhesive. Particularly, even when the sliding bearing 10 according to one embodiment of the present invention is used in a food manufacturing apparatus for which a product contamination would be a critical shortcoming, the contamination can be prevented from occurring.

Referring to FIGS. 2 to 4, the insertion groove 200 may include a first insertion groove 201 formed in the first body 110 and a second insertion groove 202 formed in the second body 120.

The first insertion groove 201 may be formed in the first body 110. The first insertion groove 201 may be formed in an inner surface of the first body 110. The first insertion groove 201 may be formed along the lengthwise direction of the first body 110. The first insertion groove 201 may extend along the lengthwise direction of the first body 110. A plurality of first insertion grooves 201 may be formed in the inner surface of the first body 110. The first insertion grooves 201 may be formed in the inner surface of the first body 110 along a circumferential direction thereof.

The first insertion groove 201 may be formed to pass through the first coupling surface 111 of the first body 110. The first insertion groove 201 may be formed in the inner surface of the first body 110 and formed to extend to the first coupling surface 111. That is, the first insertion groove 201 may be exposed at the first coupling surface 111. The first insertion groove 201 is exposed to the outside at the first coupling surface 111. The first insertion groove 201 is connected to the outside through the first coupling surface 111. Accordingly, the contact member 300 may be inserted into the first insertion groove 201 in a direction of the first coupling surface 111.

The second insertion groove 202 may be formed in the second body 120. The second insertion groove 202 may be formed in an inner surface of the second body 120. The second insertion groove 202 may be formed along the lengthwise direction of the second body 120. The second insertion groove 202 may extend along the lengthwise direction of the second body 120. A plurality of second insertion grooves 202 may be formed in the inner surface of the second body 120. The second insertion grooves 202 may be formed in the inner surface of the second body 120 along a circumferential direction thereof.

The second insertion groove 202 may be formed to pass through the second coupling surface 121 of the second body 120. The second insertion groove 202 may be formed in the inner surface of the second body 120 and may extend to the second coupling surface 121. That is, the second insertion groove 202 may be exposed at the second coupling surface 121. The second insertion groove 202 is exposed to the outside at the second coupling surface 121. The second insertion groove 202 is connected to the outside through the second coupling surface 121. Accordingly, the contact member 300 may be inserted into the second insertion groove 202 in a direction of the second coupling surface 121.

When the first body 110 and the second body 120 are coupled, the first insertion groove 201 and the second insertion groove 202 are connected to form the insertion groove 200 of the bearing body 100. Accordingly, the first body 110 and the second body 120 may be arranged at positions, in which the first insertion groove 201 and the second insertion groove 202 may be connected, and coupled to each other.

Referring to FIGS. 2 and 3, the bearing body 100 may include the first coupling surface 111 and a first limit portion 141 formed on a surface opposite the first coupling surface 111 at the first body 110.

The first limit portion 141 may be formed to block the first insertion groove 201. The first limit portion 141 may be formed to block an end portion of the first insertion groove 201. The first limit portion 141 blocks the first insertion groove 201 to prevent the separation of the contact member 300 inserted into the first insertion groove 201 to the outside. The first limit portion 141 blocks the first insertion groove 201 to fix the contact member 300 to the first insertion groove 201.

Although the first insertion groove 201 is exposed to the outside of the first body 110 at the first coupling surface 111, the first insertion groove 201 is not exposed at the first limit portion 141. Although the first insertion groove 201 passes through the first coupling surface 111, the first insertion groove 201 does not pass through the first limit portion 141. The contact member 300 may be attached to and detached from first body 110 at a side in which the first coupling surface 111 is formed. However, the contact member 300 is impossible to be attached to and detached from the first body 110 at a side in which the first limit portion 141 is formed.

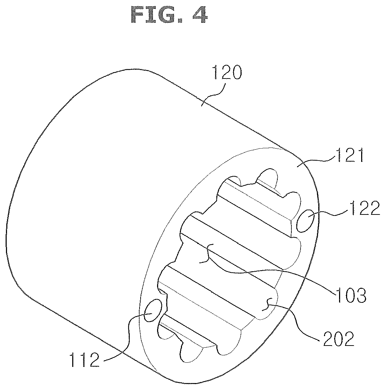

Referring to FIGS. 2 and 4, the bearing body 100 includes the second coupling surface 121 and a second limit portion 142 formed at a surface opposite the second coupling surface 121 at the second body 120.

The second limit portion 142 may be formed to block the second insertion groove 202. The second limit portion 142 may be formed to block an end portion of the second insertion groove 202. The second limit portion 142 blocks the second insertion groove 202 to prevent the separation of the contact member 300 inserted into the second insertion groove 202 to the outside. The second limit portion 142 blocks the second insertion groove 202 to fix the contact member 300 to the second insertion groove 202.

Although the second insertion groove 202 is exposed to the outside of the second body 120 at the second coupling surface 121, the second insertion groove 202 is not exposed to the outside at the second limit portion 142. Although the second insertion groove 202 passes through the second coupling surface 121, the second insertion groove 202 does not pass through the second limit portion 142. The contact member 300 may be attached to and detached from the second body 120 at a side in which the second coupling surface 121 is formed. However, the contact member 300 is impossible to be attached to and detached from the second body 120 at a side in which the second limit portion 142 is formed.

In the sliding bearing 10 according to one embodiment of the present invention, the first limit portion 141 and the second limit portion 142 are respectively integrally formed with the first body 110 and the second body 120. In addition, the contact member 300 inserted into the bearing body 100 is inserted between the first body 110 and the second body 120. That is, the sliding bearing 10 according to one embodiment of the present invention is structurally more stable since the first limit portion 141 and the second limit portion 142 are respectively integrally formed with the first body 110 and the second body 120. Because the sliding bearing 10 according to one embodiment of the present invention is structurally stable, a bigger load may be supported. In addition, the sliding bearing 10 according to one embodiment of the present invention is structurally stable to be stably installed and operated under a special condition such as in a deep sea in which the pressure is high.

Referring FIGS. 1 and 2, the contact member 300 may be inserted into the insertion groove 200. The contact member 300 may be inserted into the insertion groove 200 and positioned at the inner surface of the bearing body 100. The contact member 300 may be inserted into the insertion groove 200 and disposed along a circumferential direction of the inner surface of the bearing body 100.

One contact member 300 may be inserted into one insertion groove 200. Accordingly, when a plurality of insertion grooves 200 are formed, a plurality of contact members 300 may also be formed.

A cross-section of the contact member 300 may be formed in a shape corresponding to shapes of the first insertion groove 201 and the second insertion groove 202. As illustrated in FIGS. 2 and 6A, the contact member 300 may be formed in a rod shape. A cross-section of the contact member 300 may be formed in a circular shape.

As illustrated in FIG. 6B, the cross-section of the contact member 300 may also be formed in a pentagonal shape. The reason is that, when the cross-section of the contact member 300 is formed in a rectangular shape, when coming into contact with the shaft, a contact portion of the contact member 300 is smoothly formed in consideration of the shaft coming into contact with a corner of the contact member 300. However, the above is only an example, and a cross-section of the contact member 300 may be formed in various shapes including a rectangular shape, a hexagonal shape, etc.

The contact member 300 may be formed of a material having excellent heat tolerance property in consideration of the friction with the shaft.

The contact member 300 may be formed of a flouororesin. The flouroresin has an excellent thermal and chemical property and may be used as the contact member 300 in contact with the shaft.

Particularly, the contact member 300 may be formed of polytetrafluoroethylene (PTFE). The PTFE is used under a name of Teflon. The PTFE is formed as a very stable compound due to a powerful chemical bonding between a fluoride and a carbon atom and has properties including nearly perfect chemical inert and thermal resistance, nonadherent property, excellent insulation stability, low friction coefficient, etc.

Accordingly, the contact member 300 formed of the PTFE may have strong tolerance against strong acids and also strong alkalis. The contact member 300 formed of the PTFE may not be easily degraded and may be used for a long time. The contact member 300 formed of the PTFE may also have an excellent thermal property such that even when frictional heat is generated between the shaft and the contact member 300, the contact member 300 cannot be broken easily.

The contact member 300 may also be formed of polyvinylidene difluoride (PVDF).

While the present invention has been described above with reference to the embodiments, it may be understood by those skilled in the art that various modifications and alterations may be made without departing from the spirit and scope of the present invention described in the appended claims.

## Claims

1. A sliding bearing comprising:
a bearing body in a cylindrical shape in which a penetration space through which a shaft passes is formed;
an insertion groove formed in an inner surface of the bearing body; and
a contact member inserted into the insertion groove to be in contact with the shaft,
wherein:
the bearing body includes a first body in a cylindrical shape and a second body in a cylindrical shape provided to be coupled to or separated from the first body;
the first body includes a first coupling surface in contact with the second body and a first coupling groove formed in the first coupling surface;
the second body includes a second coupling surface in contact with the first body, a second coupling groove formed in the second coupling surface, and a coupling unit inserted into the first coupling groove and the second coupling groove to couple the first body and the second body; and
the first body and the second body are coupled by the coupling unit to form the bearing body in the cylindrical shape.

2. The sliding bearing of claim 1, wherein:
the first body includes the first coupling surface in contact with the second body;
the insertion groove includes a first insertion groove formed in an inner surface of the first body to pass through the first coupling surface;
the bearing body includes a first limit portion formed to block the first insertion groove from the first body to a surface opposite the first coupling surface; and
the first limit portion is integrally formed with the first body.

3. The sliding bearing of claim 1, wherein:
the second body includes the second coupling surface in contact with the first body;
the insertion groove includes a second insertion groove formed in an inner surface of the second body to pass through the second coupling surface;
the bearing body formed to block the second insertion groove from the second body to a surface opposite the second coupling surface; and
the second limit portion is integrally formed with the second body.

4. The sliding bearing of claim 1, wherein the insertion groove includes a seating portion on which the contact member is seated and a fixing portion configured to fix the contact member to the seating portion.

5. The sliding bearing of claim 1, wherein the contact member is formed of polytetrafluoroethylene.

6. A sliding bearing comprising:
a bearing body in a cylindrical shape in which a penetration space through which a shaft passes is formed;
an insertion groove formed in an inner surface of the bearing body;
a first limit portion formed at one end of the bearing body to cover the insertion groove; and
a second limit portion formed at the other end of the bearing body to cover the insertion groove,
wherein:
the first limit portion and the second limit portion are integrally formed with the bearing body;
the bearing body includes a first body in a cylindrical shape and a second body in a cylindrical shape to be coupled to and separated from the first body;
the first body includes a first coupling surface in contact with the second body and a first coupling groove formed in the first coupling surface;
the second body includes a second coupling surface in contact with the first body, a second coupling groove formed in the second coupling surface, and a coupling unit inserted into the first coupling groove and the second coupling groove to couple the first body and the second body; and
the first body and the second body are coupled by the coupling unit to form the bearing body in a cylindrical shape.

7. A sliding bearing comprising:
a first body in a cylindrical shape including a first penetration space formed in the first body such that a shaft passes through the first penetration space, and a first coupling surface formed at one end thereof; and
a second body in a cylindrical shape including a second penetration space formed in the second body such that a shaft passes through the second penetration space, and a second coupling surface formed at one end thereof to be coupled to and separated from the first body,
wherein:
the first body includes a first coupling groove formed in the first coupling surface;
the second body includes a second coupling groove formed in the second coupling surface, and
a coupling unit is inserted into the first coupling groove and the second coupling groove to couple the first body and the second body; and
the first coupling surface and the second coupling surface are in contact with each other such that the first penetration space and the second penetration space are coupled to be connected to each other.
